# EUROPEAN PATENT APPLICATION

(11) **EP 4 621 891 A1**
(43) Date of publication of application: **24.09.2025**
(21) Application number: 23912289.8
(22) Date of filing: 27.12.2023
(51) Int. Cl.: H01M 8/1213, C25B 1/042, C25B 9/00, C25B 9/23, C25B 9/65, C25B 9/77, C25B 13/02, H01M 8/0271, H01M 8/04, H01M 8/12, H01M 8/1226, H01M 8/2475

(54) **ELECTROCHEMICAL CELL, ELECTROCHEMICAL CELL DEVICE, MODULE, AND MODULE-ACCOMMODATING DEVICE**

(30) Priority: 27.12.2022 JP 2022210333
(71) Applicant: Kyocera Corporation, Kyoto-shi, Kyoto 612-8501 (JP)
(72) Inventor: SENO, Hiroaki, Kyoto-shi, Kyoto 612-8501 (JP)
(74) Representative: Viering, Jentschura & Partner mbB Patent- und Rechtsanwälte
(86) International application number: PCT/JP2023/047119
(87) International publication number: WO 2024/143512

(57) **Abstract**

An electrochemical cell includes a metal plate and an element portion. The metal plate includes a first surface, and a second surface positioned opposite to the first surface. The element portion is positioned on the first surface, and includes a first electrode layer, a solid electrolyte layer, and a second electrode layer. The metal plate includes:
a first portion that allows gas to flow between the first surface and the second surface; and
a second portion positioned around the first portion. The solid electrolyte layer is positioned to overlap the first portion in plan view.

## Description

### TECHNICAL FIELD

The present disclosure relates to an electrochemical cell, an electrochemical cell device, a module, and a module housing device.

### BACKGROUND OF INVENTION

In recent years, various fuel cell stack devices each including a plurality of fuel cells have been proposed as next-generation energy. A fuel cell is a type of electrochemical cell that can obtain electrical power by using a fuel gas such as a hydrogen-containing gas and an oxygen-containing gas such as air.

### CITATION LIST

### PATENT LITERATURE

Patent Document 1: WO 2020/218431

### SUMMARY

An electrochemical cell according to an aspect of an embodiment includes a metal plate and an element portion. The metal plate includes a first surface and a second surface opposite to the first surface. The element portion is positioned on the first surface, and includes: a first electrode layer; a solid electrolyte layer; and a second electrode layer. The metal plate includes: a first portion that allows gas to flow between the first surface and the second surface; and a second portion positioned around the first portion. The solid electrolyte layer is positioned to overlap the first portion in plan view.

An electrochemical cell according to an aspect of an embodiment includes a metal plate and an element portion. The metal plate includes a first surface and a second surface opposite to the first surface. The element portion is positioned on the first surface, and includes: a first electrode layer; a solid electrolyte layer; and a second electrode layer. The metal plate includes: a first portion that allows gas to flow between the first surface and the second surface; and a second portion positioned around the first portion. A contour of the first portion in plan view is positioned inside a contour of the solid electrolyte layer in plan view.

An electrochemical cell device according to the present disclosure includes a cell stack including the electrochemical cell described above.

A module of the present disclosure includes the electrochemical cell device described above and a storage container that houses the electrochemical cell device.

A module housing device of the present disclosure includes the module described above, an auxiliary device for operating the module, and an exterior case for housing the module and the auxiliary device.

### BRIEF DESCRIPTION OF THE DRAWINGS

FIG. 1A is a cross-sectional view illustrating an example of an electrochemical cell according to a first embodiment.
FIG. 1B is a side view of an example of an electrochemical cell according to the first embodiment, viewed from the air electrode side.
FIG. 2 is a plan view illustrating an example of the arrangement of a solid electrolyte layer and a metal plate in the electrochemical cell according to the first embodiment.
FIG. 3A is a plan view illustrating an example of a first portion.
FIG. 3B is a plan view illustrating another example of a first portion.
FIG. 4 is a plan view illustrating another example of the arrangement of a solid electrolyte layer and a metal plate in an electrochemical cell according to the first embodiment.
FIG. 5A is a perspective view illustrating an example of an electrochemical cell device according to the first embodiment.
FIG. 5B is a cross-sectional view taken along the line X-X illustrated in FIG. 5A.
FIG. 5C is a top view illustrating an example of an electrochemical cell device according to the first embodiment.
FIG. 6 is an exterior perspective view illustrating an example of a module according to the first embodiment.
FIG. 7 is an exploded perspective view schematically illustrating an example of a module housing device according to the first embodiment.
FIG. 8 is a cross-sectional view illustrating an example of an electrochemical cell according to a second embodiment.
FIG. 9 is a plan view illustrating an example of the arrangement of a solid electrolyte layer and a metal plate in an electrochemical cell according to the second embodiment.
FIG. 10 is a plan view illustrating another example of the arrangement of a solid electrolyte layer and a metal plate in an electrochemical cell according to the second embodiment.

### DESCRIPTION OF EMBODIMENTS

The fuel cell stack device described above has room for improvement in increasing durability.

Thus, providing an electrochemical cell, an electrochemical cell device, a module and a module housing device, capable of improving durability, has been expected.

Hereinafter, embodiments of an electrochemical cell, an electrochemical cell device, a module and a module housing device disclosed in the present application, will be described in detail with reference to the attached drawings. The present disclosure is not limited by the following embodiments.

Note that the drawings are schematic and that the dimensional relationships between elements, the proportions of the elements, or the like may differ from the actual ones. There may be differences between the drawings in terms of dimensional relationships and proportions.

### [First Embodiment]

### <Configuration of Electrochemical Cell>

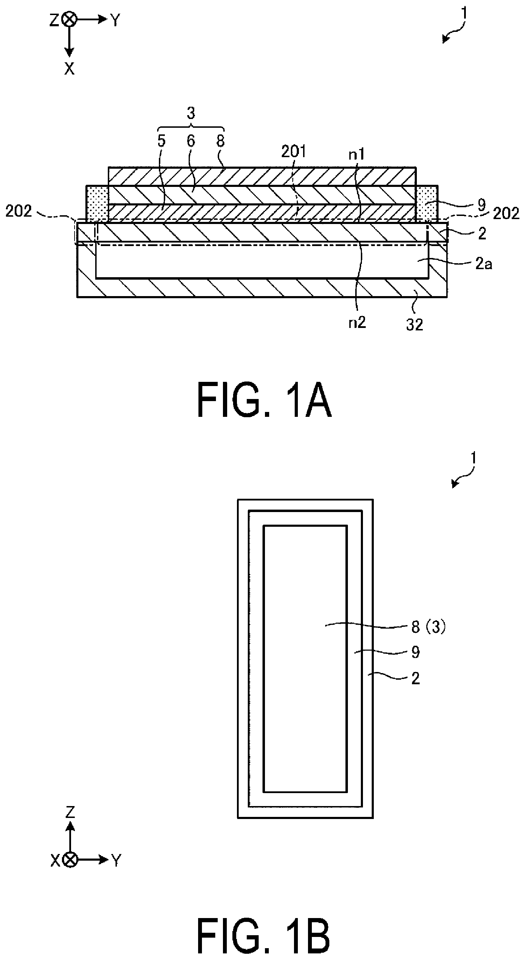

First, referring to FIGs. 1A and 1B, an example of a solid oxide fuel cell will be described as an electrochemical cell according to the first embodiment. The electrochemical cell device may include a cell stack including a plurality of electrochemical cells. An electrochemical cell device including a plurality of electrochemical cells is simply referred to as a cell stack device.

FIG. 1A is a cross-sectional view illustrating an example of an electrochemical cell according to the first embodiment. FIG. 1B is a side view of an example of an electrochemical cell according to the first embodiment viewed from the air electrode side. Note that FIGs. 1A and 1B are enlarged views each illustrating a part of a configuration of an electrochemical cell. Hereinafter, an electrochemical cell may be simply referred to as a cell.

As illustrated in FIGs. 1A and 1B, a cell 1 includes an element portion 3 in which a fuel electrode layer 5 that is a first electrode layer, a solid electrolyte layer 6, and an air electrode layer 8 that is a second electrode layer, are stacked, and a metal plate 2.

The metal plate 2 is a metal plate-like member containing chromium. In addition, the metal plate 2 has an electrical conductivity. The metal plate 2 may be made of, for example, a stainless steel with high thermal resistance such as ferritic stainless steel or austenitic stainless steel. The metal plate 2 may be made of, for example, nickel-chromium alloy or iron-chromium alloy. The metal plate 2 may contain, for example, metal oxide. The metal plate 2 may include, for example, one or more members. The metal plate 2 electrically connects adjacent cells 1 in the X axis direction.

The metal plate 2 includes a first surface n1, and a second surface n2 located opposite to the first surface n1. The metal plate 2 is a support body for supporting the element portion 3 located on the first surface n1 side. On the second surface n2 side, a gas-flow passage 2a extending in the Z axis direction, and a member 32 located outside the gas-flow passage 2a, are provided.

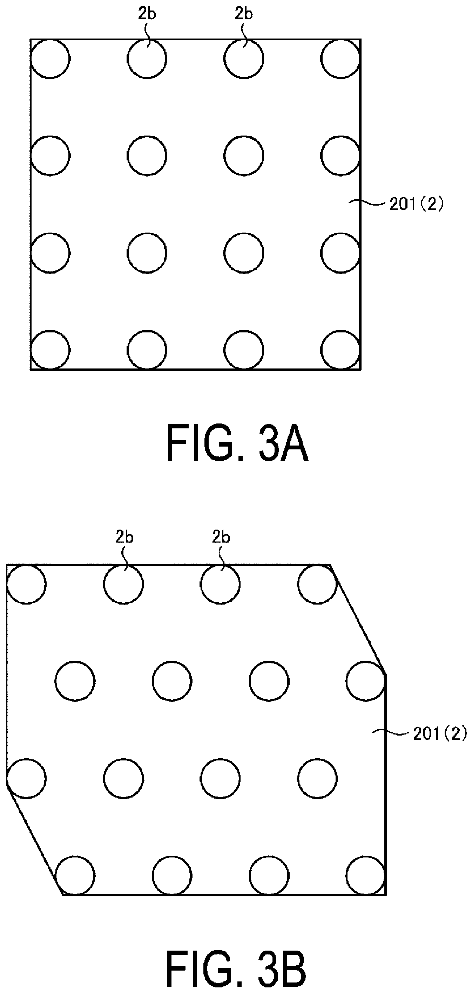

The metal plate 2 includes a first portion 201 and a second portion 202. The first portion 201 is located so as to face the element portion 3. The first portion 201 includes a plurality of openings 2b (see FIGs. 3A and 3B) penetrating in the X axis direction, for example, and is a portion in which gas can flow between the first surface n1 and the second surface n2. The second portion 202 is located around the first portion 201 and is airtight so as not to allow gas to flow between the first surface n1 and the second surface n2.

The element portion 3 is located on the first surface n1 of the metal plate 2. The element portion 3 includes the fuel electrode layer 5, the solid electrolyte layer 6, and the air electrode layer 8.

The fuel electrode layer 5 is the first electrode layer in contact with fuel gas, which is a reducing gas. The fuel electrode layer 5 has gas permeability. The open porosity of the fuel electrode layer 5 may be in the range of, for example, 30% to 50%, especially 35% to 45%. The open porosity of the fuel electrode layer 5 is sometimes referred to as the pore ratio or void ratio of the fuel electrode layer 5.

Generally known materials can be used for the fuel electrode layer 5. The fuel electrode layer 5 may be made of porous electrically conductive ceramics, such as ceramics containing: ZrO₂ in which calcium oxide, magnesium oxide, or rare earth oxides are dissolved; and Ni and/or NiO. The rare earth oxide may include, for example, a plurality of rare earth elements selected from Sc, Y, La, Nd, Sm, Gd, Dy and Yb. ZrO₂ in which calcium oxide, magnesium oxide, or rare earth oxide is solid-dissolved may be referred to as stabilized zirconia. Stabilized zirconia may include partially stabilized zirconia.

The solid electrolyte layer 6 is an electrolyte, which transfers ions between the fuel electrode layer 5 and the air electrode layer 8. At the same time, the solid electrolyte layer 6 has gas shutoff properties to prevent leakage between the fuel gas and the oxygen-containing gas.

The material of the solid electrolyte layer 6 may be, for example, ZrO₂ in which 3 mole% to 15 mole% of rare earth oxide is solid-dissolved. The rare earth oxide may include, for example, one or more rare earth elements selected from Sc, Y, La, Nd, Sm, Gd, Dy and Yb. The solid electrolyte layer 6 may include, for example: ZrO₂ in which Yb, Sc or Gd is solid-dissolved; CeO₂ in which La, Nd or Yb is solid-dissolved; BaZrO₃ in which Sc or Yb is solid-dissolved; and BaCeO₃ in which Sc or Yb is solid-dissolved.

The air electrode layer 8 is a second electrode layer in contact with oxygen-containing gas. The air electrode layer 8 has gas permeability. The open porosity of the air electrode layer 8 may be in the range of, for example, 20% to 50%, especially 30% to 50%.

The materials for the air electrode layer 8 are not specifically restricted as long as they are commonly used for air electrodes. The material of the air electrode layer 8 may be, for example, electrically conductive ceramic such as perovskite oxide of the so-called ABO₃ type.

The material of the air electrode layer 8 may be, for example, a composite oxide in which Sr (strontium) and La (lanthanum) coexist in the A-site. Examples of such composite oxide include LaₓSr₁₋ₓCo_{y}Fe_{1-y}O₃, LaₓSr₁₋ₓMnO₃, LaₓSr₁₋ₓFeO₃, LaₓSr₁₋ₓCoO₃, or the like. Note that x is 0 < x < 1 and y is 0 < y < 1.

In addition, the element portion 3 may include an intermediate layer located between the solid electrolyte layer 6 and the air electrode layer 8. When the element portion 3 includes an intermediate layer, the intermediate layer may function as a diffusion prevention layer, for example. When Sr (strontium) contained in the air electrode layer 8 diffuses into the solid electrolyte layer 6, a resistance layer of SrZrO₃ is formed in the solid electrolyte layer 6. The intermediate layer causes Sr to less likely to diffuse, thereby reducing the formation of SrZrO₃.

There are no particular limitations on the material used for the intermediate layer, as long as that material generally prevents the diffusion of elements between the air electrode layer 8 and the solid electrolyte layer 6. The material of the intermediate layer may include, for example, cerium oxide (CeO₂) in which rare earth elements except Ce (cerium) are solid-dissolved. For example, Gd (gadolinium) and Sm (samarium) may be used as the rare earth element.

The side surface of the fuel electrode layer 5 and the side surface of the solid electrolyte layer 6 are covered and sealed with a dense sealing material 9. The sealing material 9 is located outside the solid electrolyte layer 6, for example, and includes a site that overlaps the contour of the solid electrolyte layer 6 in plan view. As a result, a portion of the first portion 201 of the metal plate 2 in which the element portion 3 is not located on the first surface n1 is sealed, and the flow of fuel gas is cut off. The sealing material 9 may have electrical insulation. The material of the sealing material 9 may be glass or ceramics, for example.

### <Arrangement Example of Solid Electrolyte Layer and Metal Plate>

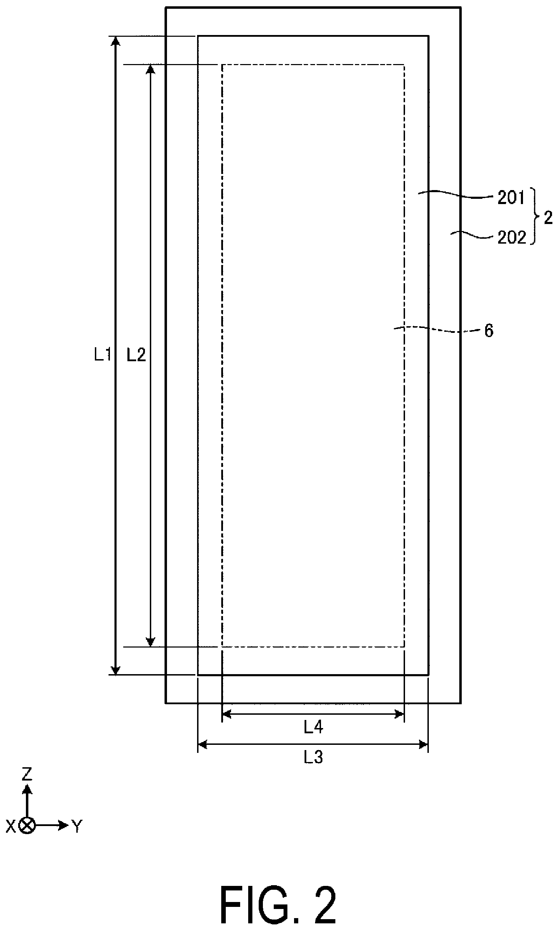

FIG. 2 is a plan view illustrating an example of the arrangement of a solid electrolyte layer and a metal plate in an electrochemical cell according to the first embodiment. In FIG. 2, some configurations, such as the air electrode layer 8 and the sealing material 9, are omitted.

As illustrated in FIG. 2, the contour of the solid electrolyte layer 6 in plan view is located inside the contour of the first portion 201 in plan view. In other words, the contour of the solid electrolyte layer 6 in plan view overlaps the contour of the first portion 201 in plan view. Note that the contour of the solid electrolyte layer 6 in plan view may coincide with the contour of the first portion 201 in plan view.

Here, when L1 is defined as the length of the first portion 201 in plan view in the length direction (Z axis direction) and L2 is defined as the length of the solid electrolyte layer 6 in plan view in the length direction (Z axis direction), L1 and L2 may satisfy, for example, L1 / L2 ≧ 1.

When L3 is defined as the length of the first portion 201 in plan view in the width direction (Y axis direction) and L4 is defined as the length of the solid electrolyte layer 6 in plan view in the width direction (Y axis direction), L3 and L4 may satisfy, for example, L3 / L4 ≧ 1.

Thus, by positioning the solid electrolyte layer 6 and the metal plate 2 such that the contour of the solid electrolyte layer 6 in plan view is inside the contour of the first portion 201 in plan view, cracking of the sealing material 9 and/or peeling of the element portion 3 from the metal plate 2, which are due to the difference in thermal expansion between the solid electrolyte layer 6 and the metal plate 2, are unlikely to occur. Thus, the durability of the cell 1 according to the present embodiment is improved.

Next, the shape of the first portion 201 in plan view will be described with reference to FIGs. 3A and 3B. FIG. 3A is a plan view illustrating an example of the first portion. FIG. 3B is a plan view illustrating another example of the first portion.

As illustrated in FIG. 3A, a plurality of openings 2b may be arranged in the metal plate 2 at equal intervals in the longitudinal and horizontal directions. The first portion 201 is defined as a shape that minimizes the polygonal length formed by connecting the outer shapes of all openings 2b. As illustrated in FIG. 3A, the shape of the first portion 201 in plan view may be rectangular.

On the other hand, as illustrated in FIG. 3B, a plurality of openings 2b arranged at equal intervals in the horizontal direction may be staggered in the metal plate 2. As illustrated in FIG. 3B, the first portion 201 in plan view may have a polygonal shape.

The shape and interval of the opening 2b are examples, and are not limited to those illustrated in FIGs. 3A and 3B. The shape of the opening 2b in plan view may be, for example, a circular shape, an elliptical shape, a quadrilateral shape, or a slit shape extending in the longitudinal direction or the lateral direction of the metal plate 2.

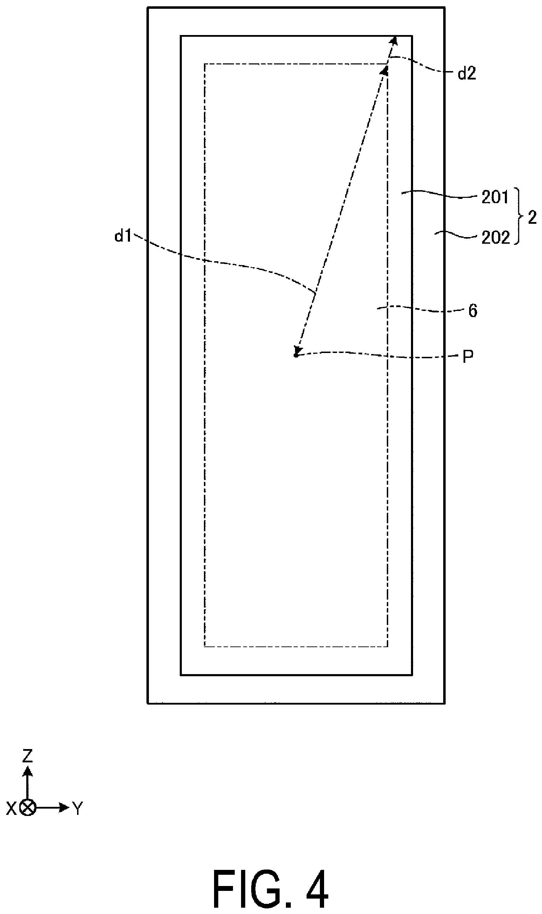

FIG. 4 is a plan view illustrating another example of the arrangement of a solid electrolyte layer and a metal plate in an electrochemical cell according to the first embodiment. In FIG. 4, the shape of the first portion 201 is simplified. The shape of the first portion 201 is defined, for example, based on the arrangement of a plurality of openings 2b formed in the center portion of the metal plate 2 as illustrated in FIGs. 3A and 3B.

As illustrated in FIG. 4, d1 is defined as the maximum length in plan view of one line segment, which connects an area gravity center P of the solid electrolyte layer 6 and the contour of the solid electrolyte layer 6, and d2 is defined as the length in plan view of another line segment, which includes at least a part of the one line segment and connects the area gravity center P and the contour of the first portion 201. In this case, d1 and d2 may satisfy, for example, d2 / d1 ≧ 1. Thus, for example, cracking of the sealing material 9 and/or peeling of the element portion 3 from the metal plate 2, which are due to the difference in thermal expansion between the solid electrolyte layer 6 and the metal plate 2, are unlikely to occur. Thus, the durability of the cell 1 according to the present embodiment is improved. The area ratio of the element portion 3 to the area of the cell 1 becomes smaller as the d2 / d1 becomes larger, so that preferably the d2 / d1 is small to the extent that the durability may not be affected.

### <Configuration of Electrochemical Cell Device>

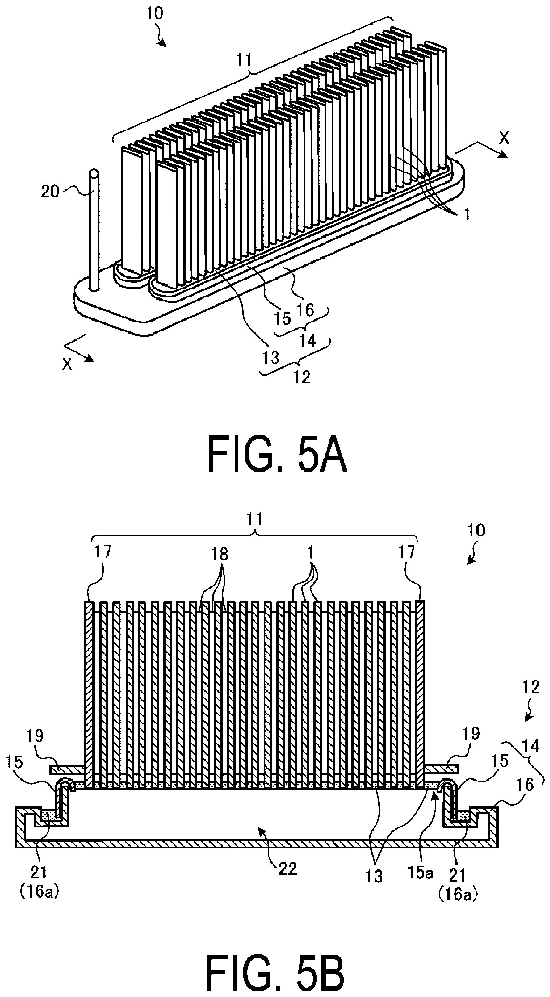

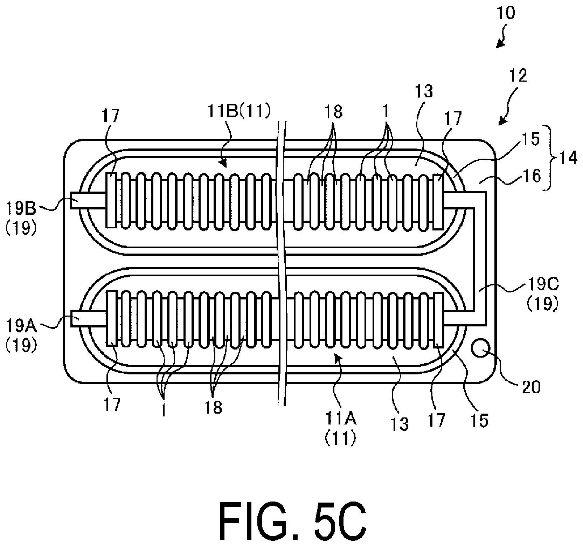

Next, an electrochemical cell device according to the present embodiment using the aforementioned electrochemical cell will be described with reference to FIGs. 5A to 5C. FIG. 5A is a perspective view illustrating an example of an electrochemical cell device according to the first embodiment. FIG. 5B is a cross-sectional view taken along the line X-X illustrated in FIG. 5A. FIG. 5C is a top view illustrating an example of an electrochemical cell device according to the first embodiment.

As illustrated in FIG. 5A, a cell stack device 10 includes a cell stack 11 including a plurality of cells 1 arranged (stacked) in the thickness direction (X axis direction) of the cell 1, and a fixing member 12.

The fixing member 12 includes a fixing material 13 and a support member 14. The support member 14 supports the cells 1. The fixing material 13 fixes the cells 1 to the support member 14. The support member 14 also includes a support body 15 and a gas tank 16. The support body 15 and the gas tank 16, which are the support member 14, are made of metal and have electrical conductivity.

As illustrated in FIG. 5B, the support body 15 includes an insertion hole 15a into which the lower ends of the plurality of cells 1 are inserted. The lower ends of the plurality of cells 1 and the inner wall of the insertion hole 15a are bonded by the fixing material 13.

The gas tank 16 includes an opening portion through which a reactive gas is supplied to the plurality of cells 1 via the insertion hole 15a, and a recessed groove 16a located around the opening portion. The outer peripheral end portion of the support body 15 is bonded to the gas tank 16 by a bonding material 21 with which the recessed groove 16a of the gas tank 16 is filled.

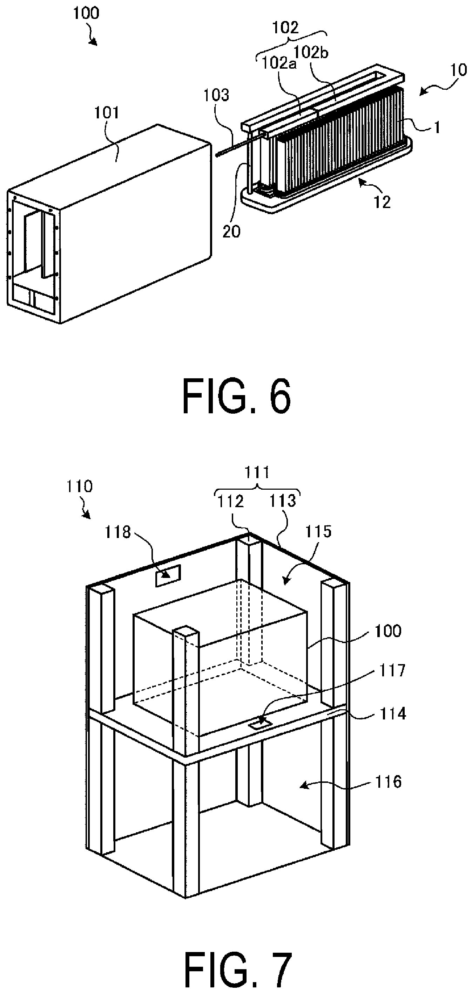

In the example illustrated in FIG. 5A, fuel gas is stored in an internal space 22 formed by the support body 15 and the gas tank 16, which are the support member 14. A gas flow pipe 20 is connected to the gas tank 16. The fuel gas is supplied to the gas tank 16 through the gas flow pipe 20, and from the gas tank 16 is supplied to the gas-flow passage 2a (see FIG. 1A) inside the cell 1. The fuel gas supplied to the gas tank 16 is generated by a reformer 102 (see FIG. 6) described below.

The hydrogen-rich fuel gas can be produced by steam reforming the raw fuel. When the fuel gas is produced by steam reforming, the fuel gas contains steam.

The example illustrated in FIG. 5A includes two rows of cell stacks 11, two support bodies 15, and the gas tank 16. Each of the two rows of cell stacks 11 includes a plurality of cells 1. Each cell stack 11 is fixed to each support body 15. The gas tank 16 has two through holes on its upper surface. Each support body 15 is arranged at each through hole. The internal space 22 is formed by one gas tank 16 and two support bodies 15.

The shape of the insertion hole 15a is, for example, an oval shape in top view. In the insertion hole 15a, for example, the length in the arrangement direction, that is, a thickness direction T of the cell 1 is larger than the distance between two end portion current collection members 17 located at both ends of the cell stack 11. The width of the insertion hole 15a is, for example, larger than that in the width direction (Y axis direction, see FIG. 1A) of the cell 1.

As illustrated in FIG. 5B, the bonding portion between the inner wall of the insertion hole 15a and the lower end of each cell 1 is filled with the fixing material 13 and solidified. Thus, the inner wall of the insertion hole 15a and the respective lower ends of the plurality of cells 1 are bonded and fixed, and the lower ends of the cells 1 are bonded and fixed to one another. The gas-flow passage 2a of each cell 1 communicates, at the lower end, with the internal space 22 of the support member 14.

The fixing material 13 and the bonding material 21 can be made of glass, or the like, with low electrical conductivity. As the specific materials of the fixing material 13 and the bonding material 21, amorphous glass or the like may be used, especially crystallized glass or the like.

As the crystallized glass, for example, any one selected from the group consisting of SiO₂-CaO-based, MgO-B₂O₃-based, La₂O₃-B₂O₃-MgO-based, La₂O₃-B₂O₃-ZnO-based, and SiO₂-CaO-ZnO-based materials may be used, and, in particular, an SiO₂-MgO-based material may be used.

As illustrated in FIG. 5B, an electrically conductive member 18 is interposed between adjacent cells 1 of the plurality of cells 1. The electrically conductive member 18 electrically connects one adjacent cell 1 and the other adjacent cell 1 in series. More specifically, the electrically conductive member 18 connects the fuel electrode layer 5 of the one cell 1 and the air electrode layer 8 of the other cell 1.

As illustrated in FIG. 5B, each of the end portion current collection members 17 is electrically connected to a respective one of the cells 1 that are located at the outermost positions in the arrangement direction of a plurality of the cells 1. Each of the end portion current collection members 17 is connected to a respective one of electrically conductive portions 19 projecting outside the cell stack 11. The electrically conductive portion 19 collects the electricity generated by the power generation of the cell 1, which is drawn to the outside. In FIG. 5A, the end portion current collection members 17 are not illustrated.

As illustrated in FIG. 5C, the cell stack device 10 may be a single battery in which two cell stacks 11A and 11B are connected in series. In such a case, the electrically conductive portion 19 of the cell stack device 10 may include a positive terminal 19A, a negative terminal 19B, and a connecting terminal 19C.

The positive terminal 19A is a positive electrode when the electrical power generated by the cell stack 11 is output to the outside, and is electrically connected to the end portion current collection member 17 on the positive side of the cell stack 11A. The negative terminal 19B is a negative electrode when the electrical power generated by the cell stack 11 is output to the outside, and is electrically connected to the end portion current collection member 17 on the negative side of the cell stack 11B.

The connecting terminal 19C electrically connects the end portion current collection member 17 on the negative side of the cell stack 11A and the end portion current collection member 17 on the positive side of the cell stack 11B.

### <Module>

Next, a module according to the embodiment of the present disclosure using the cell stack device 10 described above will be described with reference to FIG. 6. FIG. 6 is an exterior perspective view illustrating a module according to the first embodiment. FIG. 6 illustrates a state in which the front and rear surfaces, which are parts of a storage container 101, are removed and the cell stack device 10 of the fuel cell contained inside is taken out rearward.

As illustrated in FIG. 6, a module 100 includes the storage container 101 and the cell stack device 10 contained in the storage container 101. The reformer 102 is disposed above the cell stack device 10.

The reformer 102 reforms raw fuels such as natural gas and kerosene to generate fuel gas, which is supplied to the cell 1. The raw fuel is supplied to the reformer 102 through a raw fuel supply pipe 103. The reformer 102 may include a vaporizing unit 102a for vaporizing water and a reforming unit 102b. The reforming unit 102b includes a reforming catalyst (not illustrated) and reforms the raw fuel to fuel gas. Such the reformer 102 can perform steam reforming, which is a highly efficient reformation reaction.

The fuel gas generated by the reformer 102 is supplied to the gas-flow passage 2a (see FIG. 1A) of the cell 1 through the gas flow pipe 20, the gas tank 16, and the support member 14.

In the module 100 with the above configuration, the temperature inside the module 100 during the normal power generation is about 500°C to 1000°C due to gas combustion and power generation of the cell 1.

In such a module 100, as described above, the highly durable module 100 can be obtained by accommodating the highly durable cell stack device 10.

### <Module Housing Device>

FIG. 7 is an exploded perspective view illustrating an example of the module housing device according to the first embodiment. A module housing device 110 according to the present embodiment includes an exterior case 111, the module 100 illustrated in FIG. 6, and an auxiliary device (not illustrated). The auxiliary device operates the module 100. The module 100 and the auxiliary device are housed in the exterior case 111. Note that a part of the configuration is omitted in FIG. 7.

The exterior case 111 of the module housing device 110 illustrated in FIG. 7 includes a support 112 and an external plate 113. A dividing plate 114 vertically partitions the exterior case 111. The space above the dividing plate 114 in the exterior case 111 is a module container 115 for accommodating the module 100, and the space below the dividing plate 114 in the exterior case 111 is an auxiliary device container 116 for accommodating the auxiliary device that operates the module 100. Note that, in FIG. 7, the auxiliary device accommodated in the auxiliary device container 116 is omitted.

The dividing plate 114 includes an air flow communication opening 117 for allowing the air in the auxiliary device container 116 to flow toward the module container 115. The external plate 113 constituting the module container 115 includes an exhaust port 118 for exhausting the air in the module container 115.

Such the module housing device 110, as described above, includes the module 100 with high durability in the module container 115, thereby achieves the module housing device 110 with high durability.

### [Second Embodiment]

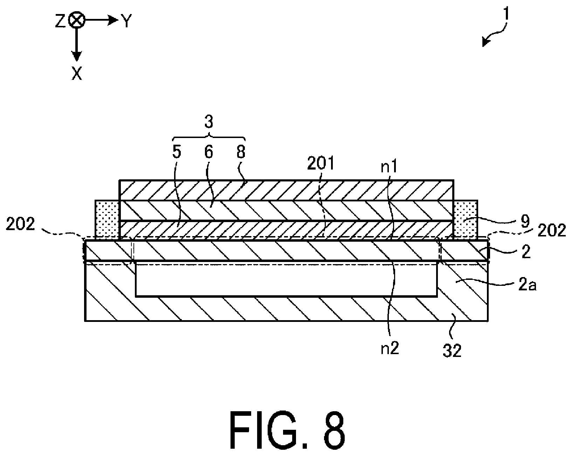

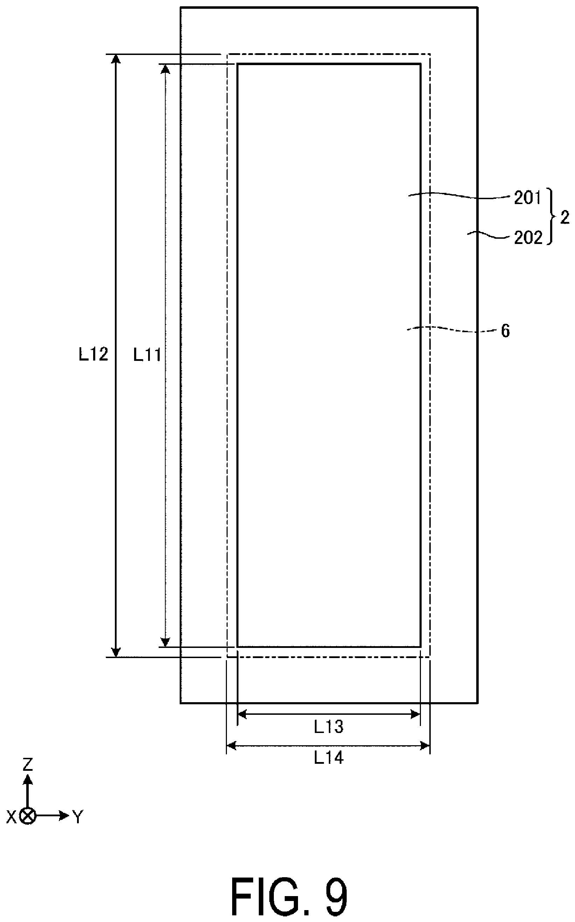

FIG. 8 is a cross-sectional view illustrating an example of an electrochemical cell according to a second embodiment. FIG. 9 is a plan view illustrating an example of the arrangement of a solid electrolyte layer and a metal plate in an electrochemical cell according to the second embodiment.

As illustrated in FIGs. 8 and 9, the contour of the first portion 201 in plan view may be located inside the contour of the solid electrolyte layer 6 in plan view.

Here, L11 is defined as the length of the first portion 201 in the length direction (Z axis direction) in plan view, and L12 is defined as the length of the solid electrolyte layer 6 in the length direction (Z axis direction) in plan view. In this case, L11 and L12 may satisfy, for example, 1 > L11 / L12 ≧ 0.9.

In addition, L13 is defined as the length in the width direction (Y axis direction) of the first portion 201 in plan view, and L14 is defined as the length in the width direction (Y axis direction) of the solid electrolyte layer 6 in plan view. In this case, L13 and L14 may satisfy, for example, 1 > L13 /L14 ≧ 0.9.

Thus, by positioning the contour of the first portion 201 in plan view so as to be slightly inside the contour of the solid electrolyte layer 6 in plan view, cracking of the sealing material 9 and/or peeling of the element portion 3 from the metal plate 2, which are due to the difference in thermal expansion between the solid electrolyte layer 6 and the metal plate 2, are unlikely to occur. Thus, the durability of the cell 1 according to the present embodiment is improved.

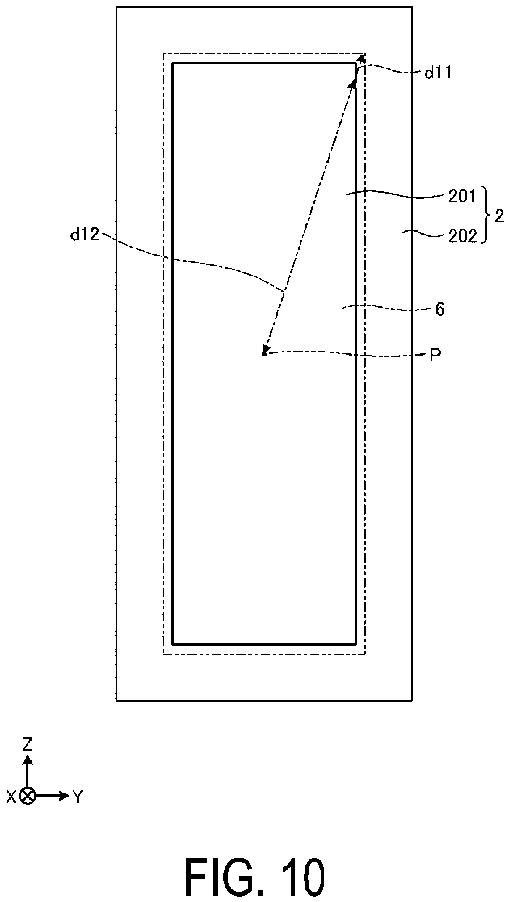

FIG. 10 is a plan view illustrating another example of the arrangement of a solid electrolyte layer and a metal plate in an electrochemical cell according to the second embodiment. Note that the shape of the first portion 201 is simplified.

As illustrated in FIG. 10, d11 is defined as the maximum length in plan view of one line segment, which connects the area gravity center P of the solid electrolyte layer 6 and the contour of the solid electrolyte layer 6, and d12 is defined as the length in plan view of another line segment, which includes at least a part of the one line segment and connects the area gravity center P and the contour of the first portion 201. In this case, d11 and d12 may satisfy, for example, 1 > d12 / d11 ≧ 0.9. Thus, for example, cracking of the sealing material 9 and/or peeling of the element portion 3 from the metal plate 2, which are due to the difference in thermal expansion between the solid electrolyte layer 6 and the metal plate 2, are unlikely to occur. Thus, the durability of the cell 1 according to the present embodiment is improved.

### [Other Embodiments]

In the above-described embodiments, a fuel cell, a fuel cell stack device, a fuel cell module, and a fuel cell device are illustrated as examples of "electrochemical cell", "electrochemical cell device", "module", and "module housing device", respectively. However, other examples may include an electrolytic cell, an electrolytic cell stack device, an electrolytic module, and an electrolytic device, respectively. The electrolytic cell includes a hydrogen electrode layer as the first electrode layer and an oxygen electrode layer as the second electrode layer, and decomposes water vapor into hydrogen and oxygen by supplying electric power. In the above-described embodiments, an oxide ion conductor or a hydrogen ion conductor is illustrated as an example of the electrolyte material of the electrochemical cell, but a hydroxide ion conductor may also be used. Such an electrolytic cell, an electrolytic cell stack device, an electrolytic module, and an electrolytic device can improve electrolytic performance and durability.

In the above-described embodiments, the shapes of the solid electrolyte layer 6 and the metal plate 2 in plan view are both rectangular, but are not limited to this shape, and may be, for example, circular, elliptical, or polygonal.

While the present disclosure has been described in detail, the present disclosure is not limited to the aforementioned embodiments, and various changes, improvements, and the like can be made without departing from the gist of the present disclosure.

In one embodiment,
(1) an electrochemical cell includes:
   a metal plate, comprising:
   a first surface; and
   a second surface positioned opposite to the first surface; and
   an element portion:
      positioned on the first surface; and
      comprising:
         a first electrode layer;
         a solid electrolyte layer; and
         a second electrode layer,
         wherein
         the metal plate includes:
            a first portion that allows gas to flow between the first surface and the second surface; and
            a second portion positioned around the first portion,
            the solid electrolyte layer is positioned to overlap the first portion in plan view.
(2) In the electrochemical cell according to (1) above,
   when
   d1 is defined as the maximum length in plan view of one line segment, wherein the one line segment connects an area gravity center of the solid electrolyte layer and a contour of the solid electrolyte layer, and
   d2 is defined as a length in plan view of another line segment, wherein the another line segment includes at least a part of the one line segment and connects the area gravity center and a contour of the first portion,
   d1 and d2 may satisfy d2 / d1 ≧ 1.

In one embodiment,
(3) an electrochemical cell includes:
   a metal plate, including:
   a first surface; and
   a second surface positioned opposite to the first surface; and
   an element portion:
      positioned on the first surface; and
      including:
         a first electrode layer;
         a solid electrolyte layer; and
         a second electrode layer,
         wherein
         the metal plate includes:
            a first portion that allows gas to flow between the first surface and the second surface; and
            a second portion positioned around the first portion,
            a contour of the first portion in plan view is positioned inside a contour of the solid electrolyte layer in plan view.
(4) In the electrochemical cell according to (3) above,
   when
   d11 is defined as a maximum length in plan view of one line segment, wherein the one line segment connects an area gravity center of the solid electrolyte layer and the contour of the solid electrolyte layer, and
   d12 is defined as a length in plan view of another line segment, wherein the another line segment includes at least a part of the one line segment and connects the area gravity center and the contour of the first portion,
   d11 and d12 may satisfy 1 > d12 / d11 ≧ 0.9.
(5) The electrochemical cell according to any one of (1) to (4) above, may further include
   a sealing material:
   positioned outside the solid electrolyte layer; and
   including a site overlapping a contour of the solid electrolyte layer in plan view.
(6) In the electrochemical cell according to any one of (1) to (5) above, the sealing material may further include
   a site overlapping a contour of the first portion.

In one embodiment,
(7) an electrochemical cell device includes
a cell stack, including
the electrochemical cell according to any one of (1) to (6) above.

In one embodiment,
(8) a module includes:
the electrochemical cell device according to (7) above; and
a storage container housing the electrochemical cell device.

In one embodiment,
(9) a module housing device, includes:
the module according to (8) above;
an auxiliary device configured to operate the module; and
an exterior case housing the module and the auxiliary device.

The disclosed embodiments should be considered exemplary in all respects and not restrictive. Indeed, the above-described embodiments can be embodied in various forms. The aforementioned embodiments may be omitted, replaced, or changed in various forms without departing from the scope of the appended claims and the purpose thereof.

### REFERENCE SIGNS

1 Cell
2 Metal plate
3 Element portion
5 Fuel electrode layer
6 Solid electrolyte layer
8 Air electrode layer
9 Sealing material
10 Cell stack device
100 Module
110 Module housing device
201 First portion
202 Second portion

## Claims

1. An electrochemical cell, comprising:
a metal plate, comprising:
a first surface; and
a second surface positioned opposite to the first surface; and
an element portion:
positioned on the first surface; and
comprising:
a first electrode layer;
a solid electrolyte layer; and
a second electrode layer,
wherein
the metal plate comprises:
a first portion that allows gas to flow between the first surface and the second surface; and
a second portion positioned around the first portion,
the solid electrolyte layer is positioned to overlap the first portion in plan view.

2. The electrochemical cell according to claim 1, wherein
when
d1 is defined as a maximum length in plan view of one line segment, wherein the one line segment connects an area gravity center of the solid electrolyte layer and a contour of the solid electrolyte layer, and
d2 is defined as a length in plan view of another line segment, wherein the another line segment includes at least a part of the one line segment and connects the area gravity center and a contour of the first portion,
d1 and d2 satisfy d2 / d1 ≧ 1.

3. An electrochemical cell, comprising:
a metal plate, comprising:
a first surface; and
a second surface positioned opposite to the first surface; and
an element portion:
positioned on the first surface; and
comprising:
a first electrode layer;
a solid electrolyte layer; and
a second electrode layer,
wherein
the metal plate, comprises:
a first portion that allows gas to flow between the first surface and the second surface; and
a second portion positioned around the first portion,
a contour of the first portion in plan view is positioned inside a contour of the solid electrolyte layer in plan view.

4. The electrochemical cell according to claim 3, wherein
when
d11 is defined as a maximum length in plan view of one line segment, wherein the one line segment connects an area gravity center of the solid electrolyte layer and the contour of the solid electrolyte layer, and
d12 is defined as a length in plan view of another line segment, wherein the another line segment includes at least a part of the one line segment and connects the area gravity center and the contour of the first portion,
d11 and d12 satisfy 1 > d12 / d11 ≧ 0.9.

5. The electrochemical cell according to any one of claims 1 to 4, further comprising
a sealing material:
positioned outside the solid electrolyte layer; and
comprising a site overlapping a contour of the solid electrolyte layer in plan view.

6. The electrochemical cell according to claim 5, wherein
the sealing material further comprises
a site overlapping a contour of the first portion.

7. An electrochemical cell device, comprising
a cell stack, comprising
the electrochemical cell according to any one of claims 1 to 6.

8. A module, comprising:
the electrochemical cell device according to claim 7; and
a storage container housing the electrochemical cell device.

9. A module housing device, comprising:
the module according to claim 8;
an auxiliary device configured to operate the module; and
an exterior case housing the module and the auxiliary device.
